(19) Europäisches Patentamt
European Patent Office
Office européen des brevets

(11) **EP 3 698 222 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **18755435.7**

(22) Anmeldetag: **10.08.2018**

(51) Internationale Patentklassifikation (IPC):
**G05B 13/02** (2006.01)     **G05B 13/04** (2006.01)

(52) Gemeinsame Patentklassifikation (CPC):
**G05B 13/0265; G05B 13/042**

(86) Internationale Anmeldenummer:
**PCT/EP2018/071742**

(87) Internationale Veröffentlichungsnummer:
**WO 2019/076511 (25.04.2019 Gazette 2019/17)**

(54) **VERFAHREN UND VORRICHTUNG ZUM EINSTELLEN MINDESTENS EINES PARAMETERS EINES AKTORREGELUNGSSYSTEMS UND AKTORREGELUNGSSYSTEM**

METHOD AND DEVICE FOR SETTING AT LEAST ONE PARAMETER OF AN ACTUATOR CONTROL SYSTEM AND ACTUATOR CONTROL SYSTEM

PROCÉDÉ ET DISPOSITIF SERVANT À RÉGLER AU MOINS UN PARAMÈTRE D'UN SYSTÈME DE RÉGULATION D'ACTIONNEUR ET SYSTÈME DE RÉGULATION D'ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2017 DE 102017218813**

(43) Veröffentlichungstag der Anmeldung:
**26.08.2020 Patentblatt 2020/35**

(73) Patentinhaber:
• **Robert Bosch GmbH**
  **70442 Stuttgart (DE)**
• **Technische Universität Darmstadt**
  **64289 Darmstadt (DE)**

(72) Erfinder:
• **BISCHOFF, Bastian**
  **73734 Esslingen (DE)**
• **VINOGRADSKA, Julia**
  **70469 Stuttgart (DE)**
• **PETERS, Jan**
  **64342 Seeheim-Jugenheim (OT Malchen) (DE)**

(74) Vertreter: **Banse & Steglich**
  **Patentanwälte PartmbB**
  **Patentanwaltskanzlei**
  **Herzog-Heinrich-Straße 23**
  **80336 München (DE)**

(56) Entgegenhaltungen:
**EP-A2- 3 062 176     DE-A1-102013 212 889**

• **TOM EREZ ET AL: "Infinite-Horizon Model Predictive Control for Periodic Tasks with Contacts", ROBOTICS: SCIENCE AND SYSTEMS VII, 27. Juni 2011 (2011-06-27), XP055512502, DOI: 10.15607/RSS.2011.VII.010 ISBN: 978-0-262-51779-9**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum automatischen Einstellen mindestens eines Parameters eines Aktorregelungssystems, ein Computerprogramm und ein Lernsystem zum Ausführen des Verfahrens, ein maschinenlesbares Speichermedium auf dem das Computerprogramm gespeichert ist, ein Aktorregelungssystem, dessen Parameter mit diesem Verfahren eingestellt wird.

Stand der Technik

Aus der nicht vorveröffentlichten DE 10 2017 211 209 ist ein Verfahren zum Verfahren zum automatischen Einstellen mindestens eines Parameters eines Aktorregelungssystems bekannt, welches zum Regeln einer Regelungsgröße eines Aktors auf eine vorgebbare Sollgröße eingerichtet ist, wobei das Aktorregelungssystem eingerichtet ist, abhängig von dem mindestens einen Parameter, der Sollgröße und der Regelungsgröße eine Stellgröße zu generieren und abhängig von dieser Stellgröße den Aktor anzusteuern, wobei ein neuer Wert des mindestens einen Parameters abhängig von einer Langzeit-Kostenfunktion gewählt wird, wobei diese Langzeit-Kostenfunktion abhängig von einer prädizierten zeitlichen Evolution einer Wahrscheinlichkeitsverteilung der Regelungsgröße des Aktors ermittelt wird und der Parameter dann auf diesen neuen Wert gesetzt wird.

Die Druckschrift DE 10 2013 212 889 A1 offenbart ein Verfahren zum Erstellen einer Regelungsfunktion, um mindestens eine physikalische Zustandsgröße einer physikalischen Einheit mithilfe mindestens einer Stellgröße auf mindestens eine vorgegebene Sollgröße zu regeln, umfassend die folgenden Schritte: Bereitstellen eines Funktionsmodells zum Abbilden einer physikalischen Einheit; Bereitstellen einer Regelungsfunktion mit Regelungsparametern, wobei die Regelungsfunktion die Stellgröße abhängig von der physikalischen Zustandsgröße generiert; und Anpassen der Regelungsparameter basierend auf ermittelten Gesamtkosten, wobei die Gesamtkosten aus einer Kombination von Funktionswerten einer Kostenfunktion gebildet werden.

Vorteil der Erfindung

Das Verfahren mit den Merkmalen des unabhängigen Anspruchs 1 hat demgegenüber den Vorteil, dass es eine optimale Einstellung des Aktorregelungssystems mit einem unbeschränkten zeitlichen Horizont der Regelung ermöglicht. Vorteilhafte Weiterbildungen sind Gegenstand der abhängigen Ansprüche.

Offenbarung der Erfindung

Die Erfindung betrifft ein Verfahren nach Anspruch 1.

Erfindungsgemäß wurde nämlich erkannt, dass diese stationäre Wahrscheinlichkeitsverteilung für sehr viele Systeme, die einen Aktor und ein erfindungsgemäßes Aktorregelungssystem umfassen, weitgehend unabhängig von den Anfangsbedingungen existiert und eindeutig ist.

Dadurch wird es möglich, die Regelungsstrategie auch dann zu optimieren, wenn keine Limitierung eines zeitlichen Horizonts der Reglung vorgegeben werden soll.

In einer vorteilhaften Weiterbildung ist ein Modell vorgesehen. Bei diesem Modell kann es sich insbesondere um einen Gauß-Prozess, vorteilhafterweise einen dünnbesetzten (engl. *sparse*) Gauß-Prozess handeln, diese stationäre Wahrscheinlichkeitsverteilung wird dann mittels dieses Modells ermittelt. Dies macht das Verfahren besonders leistungsstark.

In einer Weiterbildung dieses Aspekts kann vorgesehen sein, dass das Modell abhängig von der Stellgröße die dem Aktor zugeführt wird, wenn das Aktorregelungssystem den Aktor regelt, angepasst wird. Das Modell wird auch abhängig von der hierbei resultierenden Regelungsgröße angepasst. Unter "Anpassung des Modells" kann hierbei verstanden werden, dass Modellparameter, die das Verhalten des Modells charakterisieren, angepasst werden.

Nach erfolgter Anpassung des Modells wird dann erneut ein (optimaler) neuer Wert des mindestens einen Parameters abhängig von der stationären Wahrscheinlichkeitsverteilung der Regelungsgröße des Aktors ermittelt (und der Parameter dann erneut auf diesen neuen Wert gesetzt). Die erneute Ermittlung des neuen Werts des mindestens einen Parameters wird dabei abhängig von dem nun angepassten Modell ermittelt.

D.h. in dieser Weiterbildung ist ein episodenhafter Ansatz vorgesehen, in dem zunächst das Modell verbessert wird (indem bei Regelung des realen Aktors mit dem Aktorregelungssystem das Verhalten des realen Aktors beobachtet wird). Anschließend wird das Aktorregelungssystem verbessert, indem die Parameter, die die Regelungsstrategie des Aktorregelungssystem charakterisieren, unter Simulation der Reaktion Aktors durch das Modell optimiert werden. Diese Abfolge von Verbesserung des Modells und Anpassung der Parameter kann mehrfach wiederholt ausgeführt werden.

Dieses Vorgehen hat den Vorteil, dass Modell und Aktorregelungssystem sukzessive verbessert werden und somit eine besonders gute Anpassung des Aktorregelungssystems resultiert.

In einem weiteren besonders vorteilhaften Aspekt kann vorgesehen sein, dass die stationäre Wahrscheinlichkeitsverteilung der Regelungsgröße durch eine Approximation einer Integration über mögliche Werte der Regelungsgröße ermittelt wird, wobei diese Approximation durch numerische Quadratur geschieht. Mit "numerischer Quadratur" ist hierbei eine Approximationsmethode gemeint, die das Integral durch Auswertung des Integranden an Stützstellen und zu den Stützstellen zugehörigen Stützgewichten annähert.

Die stationäre Wahrscheinlichkeitsverteilung kann hierbei mittels eines (Gauß-)Prozesses mit einer Ein- oder Mehrzahl von Zeitschritten ermittelt werden. Der Gauß-Prozess modelliert hierbei zu jedem festen Zustand eines Zeitschritts eine Wahrscheinlichkeitsverteilung mit zugeordnetem Mittelwert und zugeordneter Varianz des Folgezustands (also des Zustands zu einem nächsten Zeitschritt).

Die Verwendung der numerischen Quadratur hat insbesondere in Verbindung mit der Verwendung von Gauß-Prozessen den Vorteil, dass die Lösung numerisch besonders einfach ist, wobei gleichzeitig die Genauigkeit der Näherung sehr gut ist, sodass das so erzeugte Aktorregelungssystem besonders leistungsfähig wird.

In einer vorteilhaften Weiterbildung wird eine Dichte der Stützstellen abhängig von einer ermittelten, insbesondere mittels des Modells und/oder des Aktorregelungssystems ermittelten, zeitlichen Evolution der Regelungsgröße ausgehend von einem aus einer initialen Wahrscheinlichkeitsverteilung (pseudo-)zufällig ermittelten initialen Wert der Regelungsgröße ermittelt wird D.h. der initiale Wert wird hierbei insbesondere aus der initialen Wahrscheinlichkeitsverteilung "gesampelt". Es wird also eine zeitliche Evolution (also eine Trajektorie im Zustandsraum) der Regelungsgröße ermittelt, an deren Anfangspunkt die Regelungsgröße den zufällig ermittelten initialen Wert annimmt. Die Dichte der Stützstellen wird dann abhängig von dieser zeitlichen Evolution gewählt. Dies führt zu einer effizienten Wahl der Stützstellen, da tatsächliche Trajektorien der Regelungsgröße mit adäquater Wahrscheinlichkeit in die Wahl der Stützstellen einfließen. Damit kann insbesondere sichergestellt werden, dass das Verfahren auch dann zuverlässig funktioniert, wenn der Parameter des Aktorregelungssystems noch nicht gut angepasst ist.

In einer Weiterbildung kann vorgesehen sein, dass die Dichte von Stützstellen auch abhängig von einer ermittelten, insbesondere mittels des Modells und/oder des Aktorregelungssystems ermittelten, zeitlichen Evolution der Regelungsgröße) ausgehend vom Sollwert) als initialem Wert der Regelungsgröße ermittelt wird. Dies hat den Vorteil, dass die Stützstellen besonders effizient gewählt werden, da bei einer Konvergenz des Verfahrens davon auszugehen ist, dass eine tatsächliche Trajektorie der Regelungsgröße in der Nähe einer Trajektorie liegen, auf der die Regelungsgröße den Sollwert annimmt.

Konkret kann vorgesehen sein, dass die Dichte von Stützstellen abhängig von einer Größe gewählt wird, die eine Glattheit des Modells an wenigstens einem Wert der Regelungsgröße in der oder den ermittelten zeitlichen Evolutionen der Regelungsgröße charakterisiert. Unter dem Ausdruck "Glattheit des Modells" kann präziser formuliert die Glattheit der Modellvorhersage, d.h. die Glattheit einer für den nachfolgend nächsten Zeitschritt prädizierten Wahrscheinlichkeitsverteilung, verstanden werden. Eine geringe Glattheit des Modells bedeutet hierbei, dass bei den zeitlichen Evolutionen zwischen aufeinanderfolgenden Zeitschritten größere Differenzen zu erwarten sind als in Fällen, in denen die Glattheit des Modells einen höheren Wert aufweist.

Diese die Glattheit Modells charakterisierende Größe kann insbesondere eine Varianz des Gauß-Prozesses sein, die wenigstens einem der Werte zugeordnet ist, den die Regelungsgröße in der oder den ermittelten zeitlichen Evolutionen annimmt. Je größer diese Varianz ist, desto geringer ist die Glattheit des Modells.

Auf diese Weise kann sichergestellt werden, dass die Wahl der Stützstellen so gewählt ist, dass ein Fehler der Approximation, insbesondere der numerischen Quadratur, besonders gering wird.

Um dies optimal durchzuführen, kann die Dichte von Stützstellen in einem Bereich abhängig von einem kleinsten Wert gewählt werden, wobei dieser kleinste Wert ein Minimalwert aus den eine Glattheit des Modells charakterisierenden Größen denjenigen Werten der Regelungsgröße ist, die in diesem Bereich liegen. D.h. es werden eine oder mehrere zeitliche Evolutionen der Regelungsgröße als diskrete Folge von Werten ermittelt, die die Regelungsgröße annimmt. Es werden dann nur diejenigen Werte der diskreten Folge von Werten betrachtet, die in dem vorgenannten Bereich liegen. Jedem dieser Werte ist eine Größe zugeordnet, die die Glattheit des Modells an dieser Stelle charakterisiert. Aus diesen zugeordneten Werten wird der kleinste Wert ausgewählt.

Alternativ oder zusätzlich kann die Dichte von Stützstellen in einem Bereich auch abhängig von einer mittleren Dichte von Stützstellen in diesem Bereich gewählt wird. Insbesondere kann vorgesehen sein, dass die Dichte von Stützstellen erhöht wird, wenn ein Quotient aus mittlerer Dichte von Stützstellen und dem kleinsten Wert einen vorgebbaren Schwellwert, insbesondere den Wert 1, unterschreitet. Ein solches Verfahren ist besonders einfach zu implementieren.

Eine Erhöhung der mittleren Dichte von Stützstellen kann dadurch geschehen, dass ein Volumenelement, auf das eine Regel zur Generierung von Stützstellen angewendet wird, verkleinert wird, beispielsweise indem ein vorhandenes Volumenelement in eine Mehrzahl kleinerer Volumenelemente aufgeteilt wird und dann für jedes dieser kleineren Volumenelement mittels der Regel zur Generierung von Stützstellen generiert werden.

In einem weiteren Aspekt kann vorgesehen sein, dass die Ermittlung eines Ergebnisses der numerischen Quadratur abhängig von einem dominanten Eigenvektor einer Matrix erfolgt, welche durch ein Produkt einer Diagonalmatrix von Stützgewichten und einer Übergangsmatrix gegeben ist, wobei die Komponenten der Übergangsmatrix jeweils eine Wahrscheinlichkeit eines Übergangs der Regelungsgröße von einer ersten Stützstelle zu einer zweiten Stützstelle charakterisieren.

Dies hat den Vorteil, dass sich die Ermittlung des dominanten Eigenvektors als Grenzwert einer Operation auf Basis einer wiederholten Matrixmultiplikation besonders effizient durchführen lässt. Die Auswertung der Funktion, die die Wahrscheinlichkeitsdichte beschreibt, muss hierbei an jeder Stützstelle nur einmal erfolgen. Dieses Verfahren lässt sich besonders gut parallelisieren und damit besonders effizient auf einer oder mehreren GPU ausführen.

In einem weiteren Aspekt der Erfindung kann vorgesehen sein, dass die Langzeit-Kostenfunktion abhängig von einer lokalen Kostenfunktion gewählt wird, wobei die lokale Kostenfunktion abhängig von einer Gaußfunktion und/oder einer Polynomfunktion gewählt wird, welche abhängig von einer Differenz zwischen Stellgröße und vorgebbarem Sollwert ist. Die Kostenfunktion kann beispielsweise als eine Linearkombination aus Gaußfunktion und Polynomfunktion gewählt werden. Eine solche Wahl der Kostenfunktion ist besonders einfach.

Vorteilhafterweise kann in einem noch weiteren Aspekt vorgesehen sein, dass die Stellgröße mittels einer Beschränkungsfunktion auf Werte innerhalb eines vorgebbaren Stellgrößenbereichs beschränkt wird. Dies ermöglicht eine besonders einfache Limitierung der Stellgröße.

Die Erfindung betrifft außerdem ein Lernsystem nach Anspruch 11.

Wie erwähnt können Aspekte des Verfahrens besonders effizient auf einer oder mehreren GPU ausgeführt werden. Das Lernsystem kann daher vorteilhafterweise eine oder mehrere GPU zur Ausführung des Verfahrens umfassen.

Nachfolgend werden Ausführungsformen der Erfindung unter Bezugnahme auf die beiliegenden Zeichnungen näher erläutert. In den Zeichnungen zeigen:

Figur 1    schematisch eine Interaktion zwischen Lernsystem und Aktor;

Figur 2    schematisch einen Aufbau von Teilen des Lernsystems;

Figur 3    schematisch eine Interaktion zwischen Aktorregelungssystem und Aktor;

Figur 4    in einem Flussdiagramm eine Ausführungsform des Verfahrens zum Trainieren des Aktorregelungssystems;

Figur 5    in einem Flussdiagramm eine Ausführungsform des Verfahrens zum Ermitteln des neuen optimalen Parameters;

Figur 6    in einem Flussdiagramm eine Ausführungsform des Verfahrens zum Ermitteln der Stützstellen.

Beschreibung der Ausführungsbeispiele

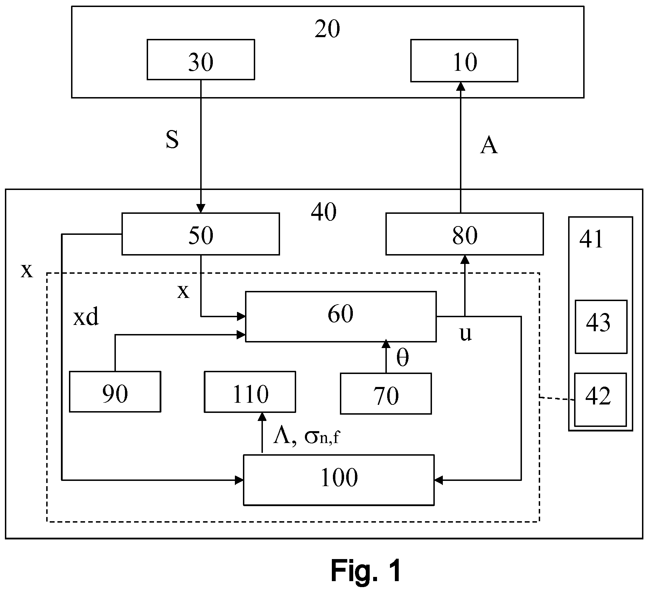

Figur 1 zeigt den Aktor 10 in seiner Umgebung 20 in Interaktion mit dem Lernsystem 40. Aktor 10 und Umgebung 20 werden gemeinschaftlich nachfolgend auch als Aktorsystem bezeichnet. Ein Zustand des Aktorsystems wird mit einem Sensor 30 erfasst, der auch durch eine Mehrzahl von Sensoren gegeben sein kann. Ein Ausgangssignal S des Sensors 30 wird an das Lernsystem 40 übermittelt. Das Lernsystem 40 ermittelt hieraus ein Ansteuersignal A, welches der Aktor 10 empfängt.

Bei dem Aktor 10 kann es sich beispielsweise um einen (teil-)autonomen Roboter, beispielsweise ein (teil-)autonomes Kraftfahrzeug einen (teil-) autonomen Rasenmäher handeln. Es kann sich auch um eine Aktuierung eines Stellglieds eines Kraftfahrzeugs handeln, beispielsweise um eine Drosselklappe oder um einen Bypass-Steller für eine Leerlaufregelung. Es kann sich auch um eine Heizungsanlage oder einen Teil der Heizungsanlage handeln, wie etwa einen Ventilsteller. Bei dem Aktor 10 kann es sich insbesondere auch um größere Systeme handeln, wie beispielsweise einen Verbrennungsmotor oder einen (ggf. hybridisierten) Antriebsstrang eines Kraftfahrzeugs oder auch um ein Bremssystem.

Bei dem Sensor 30 kann es sich beispielsweise um einen oder mehrere Videosensoren und/oder einen oder mehrere Radarsensoren und/oder einen oder mehrere Ultraschallsensoren und/oder einen oder mehrere Positionssensoren (beispielsweise GPS) handeln. Auch andere Sensoren sind denkbar, beispielsweise ein Temperatursensor.

In einem anderen Ausführungsbeispiel kann es sich bei dem Aktor 10 um einen Fertigungsroboter handeln, und bei dem Sensor 30 dann beispielsweise um einen optischen Sensor handeln, der Eigenschaften von Fertigungserzeugnissen des Fertigungsroboters erfasst.

Das Lernsystem 40 empfängt das Ausgangssignal S des Sensors in einer optionalen Empfangseinheit 50, die das Ausgangssignal S in eine Regelungsgröße x umwandelt (alternativ kann auch unmittelbar das Ausgangssignal S als Regelungsgröße x übernommen werden). Die Regelungsgröße x kann beispielsweise ein Ausschnitt oder eine Weiterverarbeitung des Ausgangssignals S sein. Die Regelungsgröße x wird einem Regler 60 zugeführt, in dem eine Regelungsstrategie π implementiert ist.

In einem Parameterspeicher 70 sind Parameter θ hinterlegt, die dem Regler 60 zugeführt werden. Die Parameter θ parametrieren die Regelungsstrategie π. Bei den Parametern θ kann es sich um eine Einzahl oder Mehrzahl von Parametern handeln.

Ein Block 90 führt dem Regler 60 die vorgebbare Sollgröße xd zu. Es kann vorgesehen sein, dass der Block 90 die vorgebbare Sollgröße xd generiert, beispielsweise abhängig von einem Sensorsignal, dass dem Block 90 vorgegeben wird. Es ist auch möglich, dass Block 90 die Sollgröße xd aus einem dedizierten Speicherbereich ausliest, in dem sie abgelegt ist.

Abhängig von der Regelungsstrategie π(θ) (und damit abhängig von den Parametern θ), von der Sollgröße xd und der Regelungsgröße x generiert der Regler 60 eine Stellgröße u. Diese kann beispielsweise abhängig von einer Differenz x-xd zwischen Regelungsgröße x und Sollgröße xd ermittelt werden.

Der Regler 60 übermittelt die Stellgröße u an eine Ausgabeeinheit 80, die hieraus das Ansteuersignal A ermittelt. Beispielsweise ist es möglich, dass die Ausgabeeinheit zunächst überprüft, ob die Stellgröße u in einem vorgebbaren Wertebereich liegt. Ist dies der Fall, wird abhängig von der Stellgröße u das Ansteuersignal A ermittelt, beispielsweise, indem abhängig von der Stellgröße u ein zugeordnetes Ansteuersignal A aus einem Kennfeld ausgelesen wird. Dies ist der Normalfall. Wird hingegen ermittelt, dass die Stellgröße u nicht in dem vorgebbaren Wertebereich liegt, so kann vorgesehen sein, dass das Ansteuersignal A derart ausgebildet ist, dass es den Aktor A in einen abgesicherten Modus überführt.

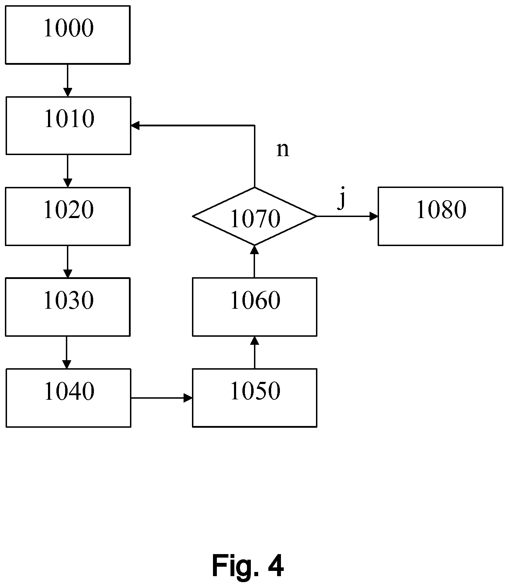

Empfangseinheit 50 übermittelt die Regelungsgröße x an einen Block 100. Ebenso übermittelt Regler 60 die korrespondierende Stellgröße u an den Block 100. Block 100 speichert die Zeitreihen der an einer Folge von Zeitpunkten empfangenen Regelungsgröße x und der jeweils korrespondierenden Stellgröße u. Block 100 kann dann abhängig von diesen Zeitreihen Modellparameter $\Lambda$, $\sigma_n$, $\sigma_f$ des Modells g anpassen. Die Modellparameter A, $\sigma_n$, $\sigma_f$ werden einem Block 110 zugeführt, der sie beispielsweise an einer dedizierten Speicherstelle speichert. Dies wird weiter unten in Figur 4, Schritt 1030 näher beschrieben.

Das Lernsystem 40 umfasst in einer Ausführungsform einen Computer 41 mit einem maschinenlesbare Speichermedium 42, auf dem ein Computerprogramm gespeichert ist, dass, wenn es vom Computer 41 ausgeführt wird, diesen veranlasst, die beschriebenen Funktionalitäten des Lernsystems 40 auszuführen. Der Computer 41 umfasst im Ausführungsbeispiel eine GPU 43.

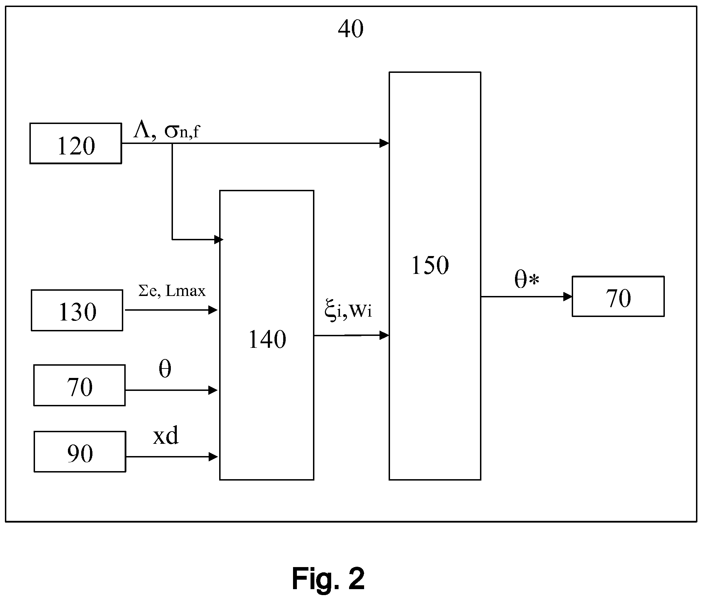

Das Modell g kann zum Optimieren der Parameter θ der Regelungsstrategie π verwendet werden. Dies ist schematisch in Figur 2 illustriert.

Block 120 übermittelt die Modellparameter A, $\sigma_n$, $\sigma_f$ an einen Block 140 und an einen Block 150. Ein Block 130 ermittelt eine Rauschvarianz $\Sigma_\varepsilon$ und eine maximale Partitionierungstiefe Lmax (beispielsweise indem diese Werte vorgegeben sind und aus dedizierten Speicherstellen im Speicher ausgelesen werden) und übermittelt sie dem Block 140. Parameterspeicher 70 übermittelt Parameter θ an den Block 140, Block 90 übermittelt den Sollwert xd an den Block 140.

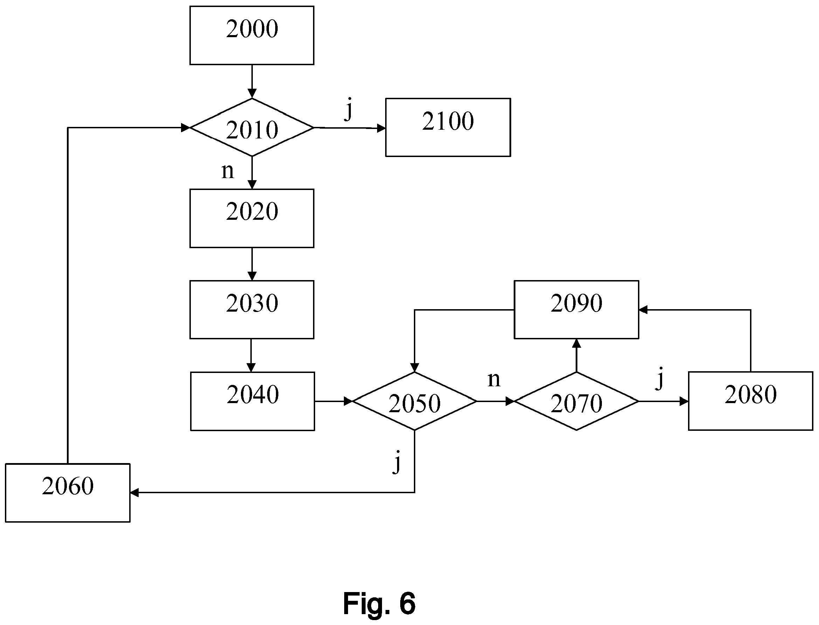

Block 140 ermittelt aus diesen Werten Stützstellen $\xi_i$ und zugehörige Stützgewichte $w_i$. Eine Ausführungsform des Algorithmus dieser Ermittlung ist in Figur 6 illustriert. Die ermittelten Stützstellen $\xi_i$ und zugehörigen Stützgewichte $w_i$ werden dem Block 150 übergeben.

Block 150 ermittelt hieraus neue Parameter θ*. Dies ist in Figur 4, Schritt 1050 beschrieben. Die neuen Parameter θ* werden dem Parameterspeicher 70 übergeben, wo die Werte der Parameter θ durch die jeweils entsprechenden Werte der neuen Parameter θ* ersetzt werden.

Die in Figur 2 dargestellten Blöcke können Teil des Lernsystems 40 sein, und dort wie in Zusammenhang mit Figur 1 beschrieben als Teil eines Computerprogramms implementiert und auf dem maschinenlesbaren Speichermedium 42 gespeichert sein.

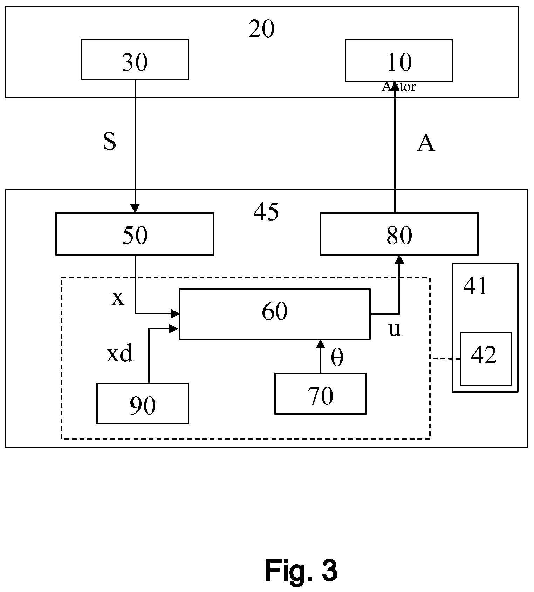

Figur 3 illustriert das Zusammenspiel des Aktorregelungssystems 45 mit dem Aktor 10. Der Aufbau des Aktorregelungssystems 45 und seine Interaktion mit Aktor 10 und Sensor 30 gleicht in weiten Teilen dem Aufbau des Lernsystems 40, weshalb hier nur die Unterschiede beschrieben werden. Im Gegensatz zum Lernsystem 40 weist das Aktorregelungssystem 45 keinen Block 100 und auch keinen Block 110 auf. Die Übermittelung von Größen an den Block 100 entfällt daher. Im Parameterspeicher 70 des Aktorregelungssystems 45 sind Parameter θ hinterlegt, die mit dem erfindungsgemäßen Verfahren, beispielsweise wie in Figur 4 illustriert, ermittelt wurden.

Figur 4 illustriert eine Ausführungsform des erfindungsgemäßen Verfahrens. Zunächst (1000) werden die Parameter θ auf initiale Werte gesetzt. Die Parameter θ können hierbei zufällig initialisiert werden, sie können aber auch fest vorgegeben werden.

Dann (1010) generiert der Regler 60 wie in Figur 1 beschrieben abhängig von der Regelungsstrategie π(θ) Stellgrößen u, mit denen wie in Figur 1 beschrieben der Aktor 10 angesteuert wird. Der Aktor 10 interagiert über die Umwelt 20 mit dem Sensor 30, dessen Sensorsignal S als Regelungsgröße x mittelbar oder unmittelbar vom Regler 60 empfangen wird.

Block 100 empfängt und aggregiert (1020) die Zeitreihen von Stellgröße u und Regelungsgröße x die gemeinsam jeweils ein Paar z aus Regelungsgröße x und Stellgröße x ergeben, $z = (x^1, \ldots, x^D, u^1 \ldots u^F)^T$.

D ist hierbei die Dimensionalität der Regelungsgröße x und F die Dimensionalität der Stellgröße u, d.h. $x \in \mathbb{R}^D, u \in \mathbb{R}^F$ .

Abhängig von dieser Zustandstrajektorie wird dann (1030) ein Gauß-Prozess g derart angepasst, dass zwischen aufeinander folgenden Zeitpunkten t, t+1 gilt

$$x_{t+1} = x_t + g(x_t, u_t). \qquad (1)$$

Hierbei ist

$$u_t = \pi_\theta(x_t). \qquad (1')$$

Eine Kovarianzfunktion k des Gauß-Prozesses g ist beispielsweise gegeben durch

$$k(z, w) = \sigma_f^2 \exp\left(-\frac{1}{2}(z - w)^T \Lambda^{-1}(z - w)\right) . \qquad (2)$$

Parameter $\sigma_f^2$ ist hierbei eine Signalvarianz, $\Lambda = diag(l_1^2 \ldots l_{D+F}^2)$ ist eine Sammlung quadrierter Längenskalen $l_1^2 \ldots l_{D+F}^2$ für jede der D+F Eingangsdimensionen.

Eine Kovarianzmatrix K ist definiert durch

$$K(Z, Z)_{i,j} = k(z^i, z^j) . \qquad (3)$$

Der Gauß-Prozess g ist dann charakterisiert durch zwei Funktionen: Durch einen Mittelwert $\mu$ und eine Varianz Var, die gegeben sind durch

$$\mu(z_*) = k(z_*, Z)(K(Z, Z) + \sigma_n^2 I)^{-1} y, \qquad (4)$$

$$Var(z_*) = k(z_*, z_*) - k(z_*, Z)(K(Z, Z) + \sigma_n^2 I)^{-1} k(Z, z_*). \qquad (5)$$

y ist hierbei in üblicher Weise gegeben durch $y^i = f(z^i) + \varepsilon^i$, mit weißem Rauschen $\varepsilon^i$.

Die Parameter $\Lambda$, $\sigma_n$, $\sigma_f$ werden dann an die Paare $(z^i, y^i)$ in bekannter Weise angepasst, indem eine logarithmierte *marginal* likelihood-Funktion maximiert wird.

Dann (1040) werden (wie in Figur 6 beispielhaft beschrieben) Stützstellen $\xi_i$ und zugehörige Stützgewichte $w_i$ ermittelt. Der Initialvektor $a_0$ mit N Komponenten wird beispielsweise auf einen zufällig gewählten Wert initialisiert und auf eine Länge von 1 normiert.

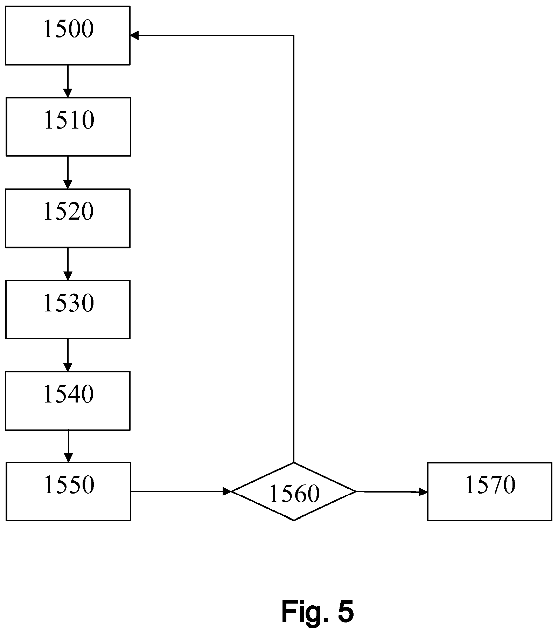

Dann (1050) wird (wie in Figur 5 beispielhaft beschrieben) ein neuer optimaler Parameter $\theta^*$ ermittelt.

Der so ermittelte neue optimale Parameter $\theta^*$ löst wenigstens näherungsweise die Gleichung

$$\theta^* = \max_\theta R_\pi^\infty(\theta) = \max_\theta \int r(x) p_{*,\theta}(x) dx. \qquad (6)$$

Hierbei bezeichnet $p_{*,\theta}$ eine stationäre Wahrscheinlichkeitsverteilung, gegen die das in Figur 1 illustrierte System fortdauernder Anwendung der Regelstrategie $\pi_\theta$ konvergiert. r(x) bezeichnet eine lokale Kostenfunktion, die beispielsweise durch ein Kennfeld oder eine mathematische Funktion definiert sein kann.

Die Lösung von Gleichung (6) erfordert eine Lösung der Gleichung

$$p_{*,\theta}(x_{t+1}) = \int p(x_{t+1} | x_t, \pi_\theta(x_t)) p_{*,\theta}(x_t) dx_t. \qquad (7)$$

Diese ist wegen der Form des Integralkerns nicht in geschlossener Form lösbar.

Die Lösung dieser Gleichung muss daher durch numerische Näherungsverfahren geschehen. Dies bringt die Herausforderung mit sich, eine hinreichende Genauigkeit zu erzielen, ohne sehr rechenintensiv zu werden. Das in Figur 5 beschriebene Verfahren entspricht im Ergebnis einer numerischen Quadratur mit den Stützstellen $\xi_i$ und zugehörige Stützgewichte $w_i$ über

$$P_{*,\theta}(x_{t+1}) \approx \sum_{i=1}^{N} w_i \cdot p\big(x_{t+1}\big|x_t = \xi_i, \pi(x_t = \xi_i)\big)p_{*,\theta}(\xi_i) \qquad (8)$$

und erreicht überraschenderweise diese Ziele.

Dann (1060) wird der Parameter θ wird durch den neuen Parameter θ* ersetzt.

Dann (1070) wird optional überprüft, ob das Verfahren der Ermittlung des Parameters θ konvergiert ist. Ist dies nicht der Fall ("n"), wird zurück zu Schritt 1010 verzweigt. Ist dies hingegen der Fall ("j") sind optimale Parameter θ gefunden, und das Verfahren wird beendet (1080). Selbstverständlich kann das Verfahren auch nach einer einzigen Iteration beendet werden.

Figur 5 illustriert das Verfahren zum Ermitteln des neuen optimalen Parameters θ* gemäß einer möglichen Ausführungsform.

Zunächst (1500) werden Basisfunktionen $\phi_i(x)$ für jeden Wert der Index-Variablen i = 1 ... N mittels des Gauß-Prozesses $g$ und der Stützstellen $\xi_i$ als $\phi_i = g(\xi_i, \pi\theta(\xi_i))$ ermittelt. Dann werden Matrixeinträge $\Phi_{i,j} = \Phi_j(\xi_i)$ für alle Index-Variablen $i,j$ = 1 ... $N$ ermittelt. D.h. die Matrixeinträge $\Phi_{i,j}$ bilden zusammen eine Übergangsmatrix ($\Phi$), wobei jeder Matrixeintrag $\Phi_{i,j}$ jeweils die im Rahmen des Gauß-Prozesses g gegebene Wahrscheinlichkeit charakterisiert, dass die Regelungsgröße x vom Zustand x = $\xi_i$ in den Zustand x = $\xi_j$ übergeht.

Nun (1510) wird die Matrix

$$M = diag(w)\Phi \qquad (8)$$

ermittelt, mit

$$diag(w)_{i,j} = w_i \delta_{i,j}.$$

Hierbei können zusätzlich die Spalten normiert werden, indem die Einträge der Matrix $M_{i,j}$ durch $M_{i,j}/\sum_{k=1}^{N} w_k \phi_j(\xi_i)$ ersetzt werden.

Dann (1520) werden ausgehend vom Initialvektor $\alpha_0$ die Gewichtsvektoren $\alpha_1$, $\alpha_2$ ... iterativ erzeugt mit

$$\alpha_{t+1} = M\alpha_t, \qquad (9)$$

und zwar so lange, bis die so erzeugten Gewichtsvektoren konvergieren, also ein vorgebbares Konvergenzkriterium erfüllen, beispielsweise $\|\alpha_{t+1} - \alpha_t\| < \varepsilon$ für einen fest vorgebbaren Wert $\varepsilon$. Der zuletzt erzeugte Gewichtsvektor $\alpha_{t+1}$ ist der dominante Eigenvektor $\alpha_\theta^\infty$ der in Gleichung (8) definierten Matrix M.

Es wurde nämlich erkannt, dass die Matrix M positiv und stochastisch (wobei "stochastisch" in diesem Kontext bedeutet, dass sich die Elemente jeder Zeile zum Wert eins summieren) ist, und nach dem Satz von Perron-Frobenius daher genau ein Eigenvektor zum betragsgrößten Eigenwert λ = 1 existiert, sodass das beschriebene Verfahren stets (im Rahmen der numerischen Genauigkeit) eindeutig konvergiert.

Der dominante Eigenvektor $\alpha_\theta^\infty$ charakterisiert damit über $p_{*,\theta}(x) \approx \Phi^T \alpha_\theta^\infty$, d.h. er charakterisiert die Darstellung der stationären Wahrscheinlichkeitsverteilung $p_{*,\theta}$ über den Basisfunktionen $\phi_i(x)$.

Als dominanter Eigenvektor der positiven Matrix $M$ ist $\alpha_\theta^\infty$ über den Parametern $\theta$, die die Matrix M parametrieren, differenzierbar. Daher wird nun (1540) eine partielle Ableitung $\dfrac{\partial \alpha_\theta^\infty}{\partial \theta}$ geschätzt. Dies kann beispielsweise dadurch geschehen, dass für variierte Parameter $\theta_\Delta$ in der Nähe des Parameters $\theta$ mit den Schritten (1500)-(1520) der entspre-

chende dominante Eigenvektor $\alpha_{\theta_\Delta}^\infty$ ermittelt wird, und die partielle Ableitung über Differenzen, beispielsweise gemäß

$$\frac{\partial \alpha_\theta^\infty}{\partial \theta} = \frac{\alpha_{\theta_\Delta}^\infty - \alpha_\theta^\infty}{\theta - \theta_\Delta}$$

geschätzt wird. Der Initialvektor $\alpha_0$ kann für verbesserte Konvergenz vor Schritt (1540) optional in einem Schritt (1530) gleich dem dominanten Eigenvektor $\alpha_\theta^\infty$ gesetzt werden.

Dann (1550) wird bevorzugt ein Gradientenaufstiegsverfahren benutzt, um θ unter Zuhilfenahme des ermittelten Schätzwerts der partiellen Ableitung $\frac{\partial \alpha_\theta^\infty}{\partial \theta}$ des dominanten Eigenvektor $\alpha_\theta^\infty$ in Richtung des Parameters θ in Richtung eines Maximalwerts von $R_\pi^\infty(\theta)$ gemäß Formel (6) zu variieren. Dies erfolgt bevorzugt über die näherungsweise Gleichung

$$R_\pi^\infty(\theta) \approx \sum_{i=1}^N \alpha_{i,\theta}^\infty \, \mathbb{E}_{x \sim \phi_i}[r(x)], \tag{10}$$

wobei $\alpha_{i,\theta}^\infty$ die Komponenten des dominanten Eigenvektors $\alpha_\theta^\infty$ bezeichnen.

Anschließend (1560) wird überprüft, ob das Verfahren zur Ermittlung des Parameters θ konvergiert ist, beispielsweise, indem überprüft wird, ob die Änderung des Parameters θ in Schritt (1550) einen vorgebbaren Grenzwert unterschreitet. Ist dies der Fall, endet das Verfahren (1570). Andernfalls beginnt eine neue Iteration in Schritt (1500).

Figur 6 illustriert das Verfahren zum Ermitteln der Stützstellen $\xi_i$ und der zugehörigen Stützgewichte $w_i$.

Zunächst wird eine Aufteilung ein Zustandsraum X aller möglichen Werte der Regelungsgröße x initialisiert. Beispielsweise kann die Aufteilung initial als die triviale Aufteilung des Zustandsraums X gewählt werden, d.h. der Zustandsraum X wird gar nicht unterteilt, sondern ist durch den gesamten Zustandsraum X gegeben.

Ein Zähler s wird auf den Wert s=1 initialisiert. Die Stützstellen $\xi_i$ werden gemäß einer numerischen Quadraturregel (wie beispielsweise der Kepler'schen Fassregel, der Trapez-Regel, der Simpson-Regel oder der Gauß-Quadratur) für den Zustandsraum X ermittelt, ebenso die zugehörigen Stützgewichte $w_i$.

Dann (2010) wird überprüft, ob der Zähler s die maximale Partitionierungstiefe Lmax erreicht hat. Ist dies der Fall, wird das Verfahren in Schritt beendet (2100).

Andernfalls wird der Sollwert xd als Wert $\tau'_0$ für die Regelungsgröße x angenommen und mit Formel (1), (1') eine zeitliche Evolution $\tau'_0, \tau'_1 \dots \tau'_T$ ermittelt (2020).

Optional wird dann ebenso ein weiterer Wert $\tau_0$ für die Regelungsgröße x gemäß der initialen Wahrscheinlichkeitsverteilung $p(x_0)$ zufällig ausgewählt, und mit Formel (1), (1') analog zu Schritt 2020 eine weitere zeitliche Evolution $\tau_0, \tau_1, \dots \tau_T$ ermittelt (2030).

Dann wird ein weiterer Zähler I auf den Wert I=1 initialisiert (2040) und überprüft (2050), ob der weitere Zähler I den Wert des Zählers s erreicht hat. Ist dies der Fall, folgt Schritt 2060, in dem der Zähler s um eins inkrementiert wird, und zurück zu Schritt 2010 verzweigt wird. Ist dies nicht der Fall, wird die Größe $\rho_l(\tau)$ ermittelt (2070), die charakterisiert, ob die Dichte der Stützstellen $\xi_i$ angemessen ist. Beispielsweise kann sie ermittelt werden zu

$$\rho_l(\tau) = \frac{vol(X_l)}{N_l \min\limits_{\tau_i \tau'_i \in X_l} Var(\tau_i)}. \tag{11}$$

Hierbei ist $X_l$ das I-te Teilvolumenelement der Partitionierung des Zustandsraums X, $Vol(X_l)$ sein Volumen und $N_l$ die Zahl der Stützstellen $\xi_i$ darin. Es wird dann überprüft (2070), ob diese Größe $\rho_l(\tau) < 1$ ist, wobei auch andere Schwellwerte als der Wert "1" möglich sind.

Ist dies der Fall ("j"), wird ein Teilvolumenelement $X_l$ in mehrere kleinere Teilvolumenelemente aufgespalten (2080), beispielsweise, indem das Teilvolumenelement $X_l$ entlang einer oder entlang aller seiner Dimensionen halbiert wird. Dann werden die mit dem Teilvolumenelement $X_l$ assoziierten Stützstellen $\xi_i$ und zugehörigen Stützgewichte $w_i$ entfernt und für jedes der neu erzeugten kleineren Teilvolumenelemente Stützstellen $\xi_i$ und zugehörigen Stützgewichte $w_i$ hinzugefügt. Dann folgt Schritt 2090, in dem der weitere Zähler I um eins inkrementiert wird. Anschließend wird zurückverzweigt zu Schritt 2050.

Ergibt die Überprüfung in Schritt 2070, dass die Bedingung nicht erfüllt ist ("n"), folgt unmittelbar Schritt 2090.

**Patentansprüche**

1.  Verfahren zum automatischen Einstellen mindestens eines Parameters ($\theta$) eines Aktorregelungssystems(45), welches zum Regeln einer Regelungsgröße (x) eines Aktors (20) auf eine vorgebbare Sollgröße (xd) eingerichtet ist, wobei das Aktorregelungssystem (45) eingerichtet ist, abhängig von dem mindestens einen Parameter ($\theta$), der Sollgröße (xd) und der Regelungsgröße (x) eine Stellgröße (u) zu generieren und abhängig von dieser Stellgröße (u) den Aktor (20) anzusteuern,

    **dadurch gekennzeichnet, dass**
    ein neuer Wert ($\theta^*$) des mindestens einen Parameters ($\theta$) abhängig von einer stationären Wahrscheinlichkeitsverteilung ($p_{*,\theta}$) der Regelungsgröße (x) ermittelt wird, und der Parameter ($\theta$) dann auf diesen neuen Wert ($\theta^*$) gesetzt wird,
    wobei die stationäre Wahrscheinlichkeitsverteilung ($p_{*,\theta}$) diejenige Wahrscheinlichkeitsverteilung ist, gegen die eine Wahrscheinlichkeitsverteilung der Regelungsgröße bei anhaltender Anwendung einer von dem Parameter abhängigen Regelungsstrategie des Aktorregelungssystems konvergiert.

2.  Verfahren nach Anspruch 1, wobei die stationäre Wahrscheinlichkeitsverteilung ($p_{*,\theta}$) abhängig von einem Modell (g), insbesondere einem Gauß-Prozess, vorteilhafterweise einem dünnbesetzten Gauß-Prozess, des Aktors (20) ermittelt wird.

3.  Verfahren nach Anspruch 2, wobei das Modell (g) abhängig von der Stellgröße (u), die bei einer Regelung des Aktors (20) mit dem Aktorregelungssystem (45) dem Aktor (20) zugeführt wird, und der dann resultierenden Regelungsgröße (x) angepasst wird, wobei nach erfolgter Anpassung des Modells (g) erneut ein neuer Wert ($\theta^*$) des mindestens einen Parameters ($\theta$) abhängig von der stationären Wahrscheinlichkeitsverteilung ($p_{*,\theta}$) der Regelungsgröße (x) des Aktors (20) ermittelt wird, wobei die erneute Ermittlung des neuen Werts ($\theta^*$) des mindestens einen Parameters ($\theta$) abhängig von dem nun angepassten Modell (g) ermittelt wird.

4.  Verfahren nach einem der Ansprüche Anspruch 1 oder 3, wobei die stationäre Wahrscheinlichkeitsverteilung ($p_{*,\theta}$) der Regelungsgröße (x) durch eine Approximation einer Integration über mögliche Werte der Regelungsgröße (x) ermittelt wird, wobei diese Approximation durch numerische Quadratur geschieht.

5.  Verfahren nach Anspruch 4, wobei eine Dichte von Stützstellen ($\xi$) der numerischen Quadratur abhängig von einer ermittelten, insbesondere mittels des Modells (g) und/oder des Aktorregelungssystems (45) ermittelten, zeitlichen Evolution ($\tau 1 \dots \tau T$) der Regelungsgröße (x) ausgehend von einem aus einer initialen Wahrscheinlichkeitsverteilung (p(x0)) zufällig ermittelten initialen Wert ($\tau 0$) der Regelungsgröße (x) ermittelt wird.

6.  Verfahren nach Anspruch 5, wobei

    - die Dichte von Stützstellen ($\xi$) auch abhängig von einer ermittelten, insbesondere mittels des Modells (g) und/oder des Aktorregelungssystems (45) ermittelten, zeitlichen Evolution ($\tau'1 \dots \tau'T$) der Regelungsgröße (x) ausgehend vom Sollwert (xd) als initialem Wert ($\tau'0$) der Regelungsgröße (x) ermittelt wird; und/oder
    - wobei die Dichte der Stützstellen ($\xi$) abhängig von einer Größe (Var) gewählt wird, die eine Glattheit des Modells (g) an wenigstens einem Wert ($\tau 0 \dots \tau T$, $\tau'0 \dots \tau'T$) der Regelungsgröße (x) in der oder den ermittelten zeitlichen Evolutionen der Regelungsgröße (x) charakterisiert, wobei insbesondere die Dichte von Stützstellen ($\xi$) in einem Bereich ($X_i$) abhängig von einem kleinsten Wert (minVar) gewählt wird, wobei der kleinste Wert (minVar) der kleinste Wert aus den eine Glattheit des Modells charakterisierenden Größen (Var) an denjenigen Werten ($\tau 0 \dots \tau T$, $\tau'0 \dots \tau'T$) der Regelungsgröße (x) ist, die in diesem Bereich ($X_i$) liegen.

7.  Verfahren nach einem der Ansprüche 4 bis 6, wobei die Dichte der Stützstellen ($\xi$) einem Bereich ($X_i$) auch abhängig von einer mittleren Dichte der Stützstellen ($\xi$) in diesem Bereich ($X_l$) gewählt wird.

8.  Verfahren nach Anspruch 6 und 7, wobei die Dichte von Stützstellen ($\xi$) erhöht wird, wenn ein Quotient aus mittlerer Dichte von Stützstellen ($\xi$) und dem kleinsten Wert (minVar) einen vorgebbaren Schwellwert unterschreitet.

9. Verfahren nach einem der Ansprüche 4 bis 8, wobei die Ermittlung eines Ergebnisses der numerischen Quadratur abhängig von einem dominanten Eigenvektor ($\alpha_\theta^\infty$) einer Matrix (M) erfolgt, welche durch ein Produkt einer Diagonalmatrix (*diag(w)*) von Stützgewichten ($w_i$) mit einer Übergangsmatrix ($\Phi$) gegeben ist, wobei die Komponenten ($\Phi_{i,j}$) der Übergangsmatrix ($\Phi$) jeweils eine Wahrscheinlichkeit eines Übergangs der Regelungsgröße (x) von einer ersten Stützstelle ($\xi_j$) zu einer zweiten Stützstelle ($\xi_i$) charakterisieren.

10. Verfahren nach einem der vorherigen Ansprüche, wobei eine Langzeit-Kostenfunktion (R) abhängig von einer lokalen Kostenfunktion (r) gewählt wird, wobei die lokale Kostenfunktion (r) abhängig von einer Gaußfunktion und/oder einer Polynomfunktion gewählt wird, welche abhängig von einer Differenz zwischen Stellgröße (x) und vorgebbarem Sollwert (xd) ist, und/oder
wobei die Stellgröße (u) mittels einer Beschränkungsfunktion ($\sigma$) auf Werte innerhalb eines vorgebbaren Stellgrößenbereichs beschränkt wird.

11. Lernsystem (40) zum automatischen Einstellen mindestens eines Parameters ($\theta$) eines Aktorregelungssystems (45), welches zum Regeln einer Regelungsgröße (x) eines Aktors (20) auf eine vorgebbare Sollgröße (xd) eingerichtet ist, **dadurch gekennzeichnet, dass** das Lernsystem (40) eingerichtet ist, das Verfahren nach einem der Ansprüche 1 bis 10 auszuführen.

12. Lernsystem (40) nach Anspruch 11, welches eingerichtet ist, das Verfahren nach Anspruch 9 auszuführen, wobei das Verfahren mit Hilfe einer GPU (43) ausgeführt wird.

13. Computerprogramm, das eingerichtet ist, das Verfahren nach einem der Ansprüche 1 bis 10 auszuführen.

14. Maschinenlesbares Speichermedium (42), auf dem das Computerprogramm nach Anspruch 13 gespeichert ist.

15. Aktorregelungssystem (45), welches zum Regeln einer Regelungsgröße (x) eines Aktors (20) auf eine vorgebbare Sollgröße (xd) eingerichtet ist, wobei das Aktorregelungssystem (45) eingerichtet ist, abhängig von dem mindestens einen Parameter ($\theta$), der Sollgröße (xd) und der Regelungsgröße (x) eine Stellgröße (u) zu generieren und abhängig von dieser Stellgröße (u) den Aktor (20) anzusteuern, **dadurch gekennzeichnet, dass** das Aktorregelungssystem eingerichtet ist, den mindestens einen Parameter ($\theta$) mit dem Verfahren nach einem der Ansprüche 1 bis 10 einzustellen.

## Claims

1. Method for automatically setting at least one parameter ($\Theta$) of an actuator control system (45) which is configured to control a control variable (x) of an actuator (20) to a predefinable target variable (xd), wherein the actuator control system (45) is configured to generate a manipulated variable (u) depending on the at least one parameter ($\Theta$), the target variable (xd) and the control variable (x) and to actuate the actuator (20) depending on this manipulated variable (u),
**characterized in that** a new value ($\Theta^*$) of the at least one parameter ($\Theta$) is determined depending on a stationary probability distribution ($p_{*,\theta}$) of the control variable (x), and the parameter ($\Theta$) is then set to this new value ($\theta^*$), wherein the stationary probability distribution ($p_{*,\theta}$) is that probability distribution on which a probability distribution of the control variable converges when a control strategy of the actuator control system that depends on the parameter is applied continuously.

2. Method according to Claim 1, wherein the stationary probability distribution ($p_{*,\theta}$) is determined depending on a model (g), in particular on a Gaussian process, advantageously on a sparse Gaussian process, of the actuator (20).

3. Method according to Claim 2, wherein the model (g) is adapted depending on the manipulated variable (u), which is supplied to the actuator (20) when the actuator (20) is controlled using the actuator control system (45), and the resulting control variable (x), wherein, after the model (g) is adapted, a new value ($\Theta^*$) of the at least one parameter ($\Theta$) is redetermined depending on the stationary probability distribution ($p_{*,\theta}$) of the control variable (x) of the actuator (20), wherein the redetermination of the new value ($\Theta^*$) of the at least one parameter ($\Theta$) is determined depending on the now adapted model (g).

4. Method according to either of Claims 1 and 3, wherein the stationary probability distribution ($p_{*,\theta}$) of the control variable (x) is determined by an approximation of an integration using possible values of the control variable (x), wherein said approximation is carried out using numerical quadrature.

5. Method according to Claim 4, wherein a density of grid points ($\xi$) of the numerical quadrature is determined depending on a determined temporal evolution ($\tau1 \ldots \tau T$) of the control variable (x), which evolution is in particular determined by means of the model (g) and/or the actuator control system (45), proceeding from an initial value ($\tau0$) of the control variable (x) that was randomly determined from an initial probability distribution (p(xO)).

6. Method according to Claim 5, wherein

- the density of grid points ($\xi$) is also determined depending on a determined temporal evolution ($\tau'1 \ldots \tau'T$) of the control variable (x), which evolution is in particular determined by means of the model (g) and/or the actuator control system (45), proceeding from the target value (xd) as the initial value ($\tau'0$) of the control variable (x); and/or
- wherein the density of the grid points ($\xi$) is selected depending on a variable (Var) which characterizes a smoothness of the model (g) at at least one value ($\tau0 \ldots \tau T, \tau'0 \ldots \tau'T$) of the control variable (x) in the determined temporal evolution(s) of the control variable (x), wherein, in particular, the density of grid points ($\xi$) in a range ($X_i$) is selected depending on a smallest value (minVar), wherein the smallest value (minVar) is the smallest value of the variables (Var) which characterize a smoothness of the model at those values ($\tau0 \ldots \tau T, \tau'0 \ldots \tau'T$) of the control variable (x) which are in this range ($X_i$).

7. Method according to any one of Claims 4 to 6, wherein the density of the grid points ($\xi$) in a range ($X_l$) can also be selected depending on an average density of the grid points ($\xi$) in this range ($X_l$).

8. Method according to Claim 6 and 7, wherein the density of grid points ($\xi$) is increased if a quotient of the average density of grid points ($\xi$) and the smallest value (minVar) falls below a predefinable threshold value.

9. Method according to any one of Claims 4 to 8, wherein the determination of a result of the numeric quadrature is dependent on a dominant eigenvector ($\alpha_\theta^\infty$) of a matrix (M) which is given by a product of a diagonal matrix (*diag(w)*) of grid weights ($w_i$) with a transition matrix ($\Phi$), wherein the components ($\Phi_{i,j}$) of the transition matrix ($\Phi$) each characterize a probability of a transition of the control variable (x) from a first grid point ($\xi_j$) to a second grid point ($\xi_i$).

10. Method according to any one of the preceding claims, wherein a long-term cost function (R) is selected depending on a local cost function (r), wherein the local cost function (r) is selected depending on a Gaussian function and/or a polynomial function which is dependent on a difference between the manipulated variable (x) and the predefinable target value (xd), and/or
wherein the manipulated variable (u) is limited by means of a limitation function ($\sigma$) to values within a predefinable manipulated variable range.

11. Learning system (40) for automatically setting at least one parameter ($\Theta$) of an actuator control system (45) which is configured to control a control variable (x) of an actuator (20) to a predefinable target variable (xd), **characterized in that** the learning system (40) is configured to carry out the method according to any one of Claims 1 to 10.

12. Learning system (40) according to Claim 11, which is configured to carry out the method according to Claim 9, wherein the method is carried out using a GPU (43).

13. Computer program which is configured so as to execute the method according to one of Claims 1 to 10.

14. Machine-readable storage medium (42) on which the computer program according to Claim 13 is stored.

15. Actuator control system (45), which is configured to control a control variable (x) of an actuator (20) to a predefinable target variable (xd), wherein the actuator control system (45) is configured to generate a manipulated variable (u) depending on the at least one parameter ($\Theta$), the target variable (xd) and the control variable (x) and to activate the actuator (20) depending on this manipulated variable (u), **characterized in that** the actuator control system is configured to set the at least one parameter ($\Theta$) using the method according to any one of Claims 1 to 10.

**Revendications**

1. Procédé permettant de régler automatiquement au moins un paramètre (Θ) d'un système de régulation d'actionneur (45) qui est conçu pour réguler une grandeur de régulation (x) d'un actionneur (20) sur une grandeur de consigne (xd) prédéfinissable, dans lequel le système de régulation d'actionneur (45) est conçu pour générer une grandeur de réglage (u) en fonction dudit au moins un paramètre (Θ), de la grandeur de consigne (xd) et de la grandeur de régulation (x), et pour piloter l'actionneur (20) en fonction de cette grandeur de réglage (u), **caractérisé en ce qu'**une nouvelle valeur (Θ*) dudit au moins un paramètre (Θ) est déterminée en fonction d'une distribution de probabilité stationnaire ($p_{*,\theta}$) de la grandeur de régulation (x), et le paramètre (Θ) est alors réglé sur cette nouvelle valeur (θ*), dans lequel la distribution de probabilité ($p_{*,\theta}$) est la distribution de probabilité vers laquelle converge une distribution de probabilité de la grandeur de régulation en cas d'application continue d'une stratégie de régulation, dépendant du paramètre, du système de régulation d'actionneur.

2. Procédé selon la revendication 1, dans lequel la distribution de probabilité stationnaire ($p_{*,\theta}$) est déterminée en fonction d'un modèle (g), en particulier d'un processus gaussien, de façon avantageuse d'un processus gaussien clairsemé, de l'actionneur (20).

3. Procédé selon la revendication 2, dans lequel le modèle (g) est adaptée en fonction de la grandeur de réglage (u) qui est amenée à l'actionneur (20) par le système de régulation d'actionneur (45) lors d'une régulation de l'actionneur (20) et en fonction de la grandeur de régulation (x) alors résultante, dans lequel, une fois l'adaptation du modèle (g) effectuée, une nouvelle valeur (Θ*) dudit au moins un paramètre (Θ) est déterminée en fonction de la distribution de probabilité stationnaire ($p_{*,\theta}$) de la grandeur de régulation (x) de l'actionneur (20), dans lequel la détermination renouvelée de la nouvelle valeur (Θ*) dudit au moins un paramètre (Θ) est déterminée en fonction du modèle (g) désormais adapté.

4. Procédé selon l'une quelconque des revendications 1 ou 3, dans lequel la distribution de probabilité stationnaire ($p_{*,\theta}$) de la grandeur de régulation (x) est déterminée par une approximation d'une intégration sur des valeurs possibles de la grandeur de régulation (x), cette approximation étant effectuée par quadrature numérique.

5. Procédé selon la revendication 4, dans lequel une densité de points nodaux (ξ) de la quadrature numérique est déterminée en fonction d'une évolution dans le temps (τ1 ... τT) déterminée, en particulier déterminée au moyen du modèle (g) et/ou du système de régulation d'actionneur (45), de la grandeur de régulation (x) en partant d'une valeur initiale (τ0) de la grandeur de régulation (x), déterminée de façon aléatoire à partir d'une distribution de probabilité initiale (p(xO)).

6. Procédé selon la revendication 5, dans lequel

   - la densité des points nodaux (ξ) est déterminée aussi en fonction d'une évolution dans le temps (τ1 ... τT) déterminée, en particulier déterminée au moyen du modèle (g) et/ou du système de régulation d'actionneur (45), de la grandeur de régulation (x), en partant de la valeur de consigne (xd) comme valeur initiale (τ'0) de la grandeur de régulation (x) ; et/ou
   - dans lequel la densité des points nodaux (ξ) est choisie en fonction d'une grandeur (Var) qui caractérise une planéité du modèle (g) au niveau d'au moins une valeur (τ0 ... τT, τ'0 ... τ'T) de la grandeur de régulation (x) dans la ou les évolutions dans le temps déterminées de la grandeur de régulation (x), dans lequel en particulier la densité des points nodaux (ξ) dans une plage ($X_i$) est sélectionnée en fonction d'une valeur minimale (minVar), dans lequel la valeur minimale (minVar) est la plus petite valeur parmi les grandeurs (Var) caractérisant une planéité du modèle au niveau des valeurs (τ0 ... τT, τ'0 ... τ'T) de la grandeur de régulation (x) qui se trouvent dans cette plage ($X_i$).

7. Procédé selon l'une quelconque des revendications 4 à 6, dans lequel la densité des points nodaux (ξ) dans une plage ($X_l$) est aussi choisie en fonction d'une densité des points nodaux (ξ) moyenne dans cette plage ($X_l$).

8. Procédé selon les revendications 6 et 7, dans lequel la densité des points nodaux (ξ) augmente lorsqu'un quotient de la densité moyenne de points nodaux (ξ) et de la valeur minimale (minVar) est inférieur à une valeur seuil prédéfinissable.

9. Procédé selon l'une quelconque des revendications 4 à 8, dans lequel la détermination d'un résultat de la quadrature numérique est effectuée en fonction d'un vecteur propre dominant ( $\alpha_\theta^\infty$ ) d'une matrice (M) qui est donnée par un produit d'une matrice diagonale (*diag(w)*) de pondérations nodales ($w_i$) avec une matrice de transition ($\Phi$) , dans lequel les composantes ($\Phi_{i,j}$) de la matrice de transition ($\Phi$) caractérisent respectivement une probabilité d'une transition de la grandeur de régulation (x) d'un premier point nodal ($\xi_j$) à un deuxième point nodal ($\xi_i$).

10. Procédé selon l'une quelconque des revendications précédentes, dans lequel une fonction de coût à long terme (R) est choisie en fonction d'une fonction de coût locale (r), dans lequel la fonction de coût locale (r) est choisie en fonction d'une fonction gaussienne et/ou d'une fonction polynomiale qui dépend d'une différence entre la grandeur de réglage (x) et la valeur de consigne prédéfinissable (xd), et/ou
dans lequel la grandeur de réglage (u) est limitée au moyen d'une fonction de limitation ($\sigma$) à des valeurs à l'intérieur d'une plage de grandeurs de réglage prédéfinissable.

11. Système d'apprentissage (40) permettant de régler automatiquement au moins un paramètre ($\Theta$) d'un système de régulation d'actionneur (45), qui est conçu pour réguler une grandeur de régulation (x) d'un actionneur (20) sur une grandeur de consigne prédéfinissable (xd), **caractérisé en ce que** le système d'apprentissage (40) est conçu pour exécuter le procédé selon l'une quelconque des revendications 1 à 10.

12. Système d'apprentissage (40) selon la revendication 11, qui est conçu pour exécuter le procédé selon la revendication 9, dans lequel le procédé est exécuté à l'aide d'une GPU (43).

13. Programme informatique, qui est conçu pour exécuter le procédé selon l'une quelconque des revendications 1 à 10.

14. Support de stockage lisible par machine (42), sur lequel est enregistré le programme informatique selon la revendication 13.

15. Système de régulation d'actionneur (45) qui est conçu pour réguler une grandeur de régulation (x) d'un actionneur (20) sur une grandeur de consigne prédéfinissable (xd), dans lequel le système de régulation d'actionneur (45) est conçu pour générer une grandeur de réglage (u) en fonction dudit au moins un paramètre ($\Theta$), de la grandeur de consigne (xd) et de la grandeur de régulation (x), et pour piloter l'actionneur (20) en fonction de cette grandeur de réglage (u), **caractérisé en ce que** le système de régulation d'actionneur est conçu pour régler au moins un paramètre ($\Theta$) à l'aide du procédé selon l'une quelconque des revendications 1 à 10.

Fig. 1

EP 3 698 222 B1

**Fig. 2**

Fig. 3

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017211209
- DE 102013212889 A1